# FASCICULE DE BREVET EUROPEEN

(11) **EP 3 398 808 B1**
(45) Date de publication et mention de la délivrance du brevet: **04.12.2019**
(21) Numéro de dépôt: 18170622.7
(22) Date de dépôt: 03.05.2018
(51) Int. Cl.: B60N 3/06, B61D 33/00, B60N 2/14

(54) **SIÈGE ROTATIF À REPOSE-PIEDS RELEVABLE, NOTAMMENT POUR VÉHICULE FERROVIAIRE**
DREHSITZ MIT HOCHKLAPPBARER FUSSSTÜTZE, INSBESONDERE FÜR SCHIENENFAHRZEUG
ROTARY SEAT WITH RAISABLE FOOTREST, IN PARTICULAR FOR RAILWAY VEHICLE

(30) Priorité: 04.05.2017 FR 1753941
(43) Date de publication de la demande: 07.11.2018
(73) Titulaire: ALSTOM Transport Technologies, 93400 Saint-Ouen (FR)
(72) Inventeur: PAILLER, Christophe, 17180 Périgny (FR); LUGOL, Jean-Louis, 17540 Vérines (FR); FEBVRE, Julien, 27930 Angervilles la Campagne (FR)
(74) Mandataire: Lavoix

(56) Documents cités:
- CA-A1- 2 791 131
- DE-U1-202013 009 983
- US-A- 2 093 455
- US-A- 2 561 091

## Description

La présente invention concerne un siège rotatif, notamment destiné à équiper un véhicule ferroviaire.

Un tel siège est plus particulièrement destiné à équiper notamment un train à grande vitesse ou tout train grandes lignes.

Certains véhicules ferroviaires sont équipés de sièges comportant un dispositif de rotation pour améliorer le confort des passagers en leur permettant de voyager dans le sens de la marche quelle que soit l'orientation du véhicule ferroviaire, comme dans le document D1 US2561091.

Ainsi, avant chaque trajet emprunté par le véhicule ferroviaire, un opérateur actionne le dispositif de rotation pour orienter le siège dans le bon sens. Les sièges dans les véhicules ferroviaires sont généralement équipés de repose-pieds. Un tel repose-pieds, lorsqu'il est déployé, peut entraver la rotation du siège, dégrader l'environnement du siège ou blesser l'opérateur au cours d'une telle rotation.

L'invention a notamment pour but d'éviter une dégradation de l'environnement du siège et de rendre plus rapide la manipulation de tels sièges rotatifs par un opérateur.

A cet effet, l'invention a notamment pour objet un siège rotatif autour d'un axe de rotation vertical, notamment destiné à équiper un véhicule ferroviaire, le siège comportant un bâti monté à rotation sur une structure de support comportant un plateau de support, le siège comportant au moins une place comportant une assise et un dossier, le siège étant équipé d'au moins un repose-pieds comportant une partie de liaison reliée au dossier du siège et une partie libre, le repose- pieds étant mobile autour d'un axe de rotation horizontal entre une position d'utilisation dans laquelle la partie libre est propre à recevoir des pieds d'un utilisateur, et une position rabattue, dans laquelle la partie libre est rabattue contre le dossier, caractérisé en ce que le siège comporte un dispositif de relevage du repose-pieds depuis la position d'utilisation vers la position rabattue, le dispositif de relevage comprenant un levier configuré pour déplacer le repose-pieds vers sa position rabattue, le levier étant porté par le siège et comportant un point d'articulation, une extrémité menée et une extrémité menante situées de part et d'autre du point d'articulation, le levier étant disposé de sorte que l'extrémité menée vient coopérer avec le repose-pieds au moins en position d'utilisation, et l'extrémité menante vient coopérer avec un bossage ménagé sur le plateau de support lorsque le siège se déplace en rotation.

Grâce au levier, le repose-pieds est relevé automatiquement vers sa position rabattue lors de la rotation du siège. Le repose-pieds n'entrave alors aucunement la rotation du siège, et ne risque pas de dégrader l'environnement du siège ou de blesser l'opérateur.

Un siège selon l'invention peut comporter en outre l'une ou plusieurs des caractéristiques suivantes, prises seules ou selon toutes combinaisons techniquement envisageables.

La partie de liaison du repose-pieds présente au moins une extension, l'extension étant destinée à coopérer avec l'extrémité menée du levier au moins lorsque le repose-pieds est dans sa position d'utilisation.

Le levier est mobile entre une position d'enclenchement, dans laquelle le repose-pieds vient coopérer avec ce levier lorsque ce repose-pieds est en position d'utilisation, et une position baissée, le levier comprenant au point d'articulation un organe élastique de rappel de ce levier vers sa position d'enclenchement.

Le repose-pieds est mobile entre la position d'utilisation et la position rabattue sur une course comportant une première zone, dans laquelle le repose-pieds est entraîné par gravité vers la position d'utilisation, et une seconde zone, dans laquelle le repose-pieds est rappelé élastiquement vers la position rabattue, le levier étant configuré pour déplacer le repose-pieds depuis la position d'utilisation, jusqu'à dans la seconde zone.

La partie de liaison du repose-pieds comprend un organe élastique de relevage du repose-pieds vers sa position rabattue, lorsque le repose-pieds est dans la seconde zone.

Le plateau de support comporte au moins deux bossages, chaque bossage étant destiné à coopérer avec le même levier lorsque le siège se déplace dans un sens de rotation respectif.

Le siège est un siège du type double qui comporte deux places comportant chacune une assise respective et un dossier respectif prolongeant l'assise correspondante, chaque place étant équipée d'un repose-pieds respectif, chaque repose-pieds comportant une partie de liaison respective reliée au dossier correspondant et une partie libre respective, chaque place comportant un dispositif respectif de relevage du repose-pieds correspondant depuis la position d'utilisation vers la position rabattue, et chaque dispositif de relevage comprenant un levier respectif configuré pour déplacer le repose-pieds correspondant vers sa position rabattue, chaque levier étant porté par le siège, chaque repose-pieds venant coopérer avec l'extrémité menée du levier respectif au moins en position d'utilisation, et l'extrémité menante respective venant coopérer avec un bossage respectif ménagé sur le plateau de support, lorsque le siège se déplace en rotation.

L'invention concerne également un procédé de relevage d'un repose-pieds d'un siège rotatif, le repose-pieds étant dans une position d'utilisation dans laquelle le repose-pieds coopère avec l'extrémité menée du levier, dans lequel le siège est mis en rotation autour de l'axe vertical au moins jusqu'à ce que l'extrémité menante du levier vienne coopérer avec un bossage, entraînant la rotation du levier, ladite rotation du levier entraînant l'appui de l'extrémité menée du levier sur le repose-pied, entraînant la rotation du repose-pieds vers sa position rabattue.

Avantageusement, le repose-pieds est mobile entre la position d'utilisation et la position rabattue sur une course comportant une première zone, dans laquelle le repose-pieds est entraîné par gravité vers la position d'utilisation, et une seconde zone, dans laquelle le repose-pieds est rappelé élastiquement vers la position rabattue, et dans lequel le levier déplace le repose-pieds depuis la position d'utilisation, jusqu'à dans la seconde zone.

L'invention sera mieux comprise à la lumière de la description qui va suivre, donnée uniquement à titre d'exemple et faite en se référant aux figures annexées, parmi lesquelles :
- la figure 1 est une vue de côté représentant un siège équipé d'un repose-pieds selon un exemple de mode de réalisation de l'invention,
- la figure 2 est une vue représentant le repose-pieds équipant le siège de la figure 1,
- la figure 3 est une vue représentant un dispositif de relevage du repose-pieds du siège de la figure1.

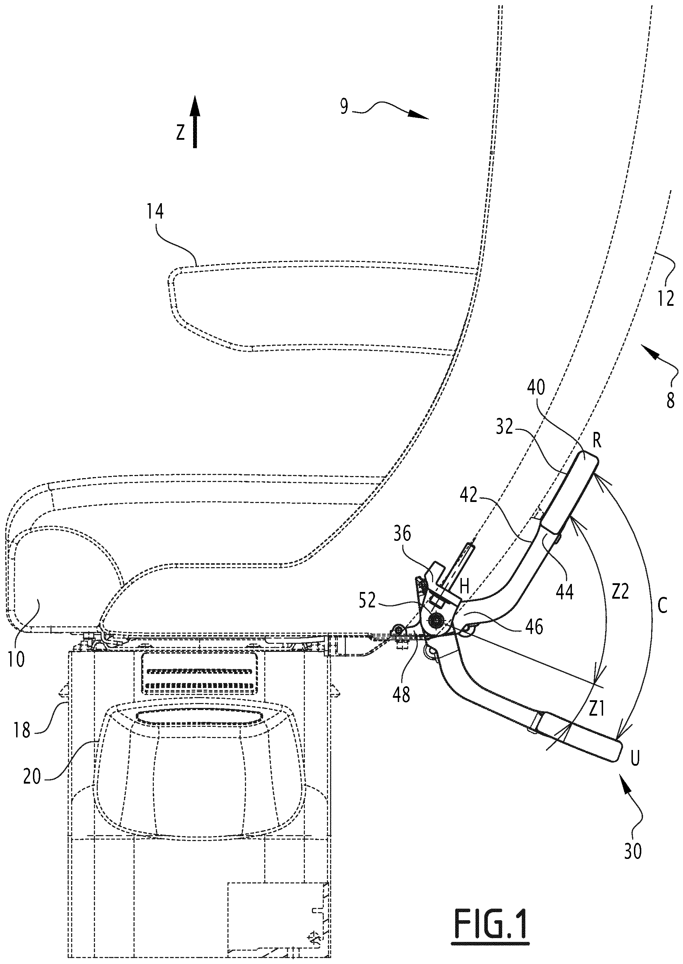

On a représenté, sur la figure 1, un siège 8 destiné à équiper un véhicule ferroviaire.

Dans l'exemple décrit, le siège 8 est du type double, destiné à être utilisé par deux personnes. Un tel siège double 8 comporte deux places 9 disposées l'une à côté de l'autre, comportant chacune une assise 10 et un dossier 12 prolongeant cette assise 10. Un siège double 8 comporte également des accoudoirs 14, par exemple trois accoudoirs 14 (un accoudoir entre les assises, et les autres de part et d'autre du siège double) ou quatre accoudoirs 14 (deux accoudoirs de part et d'autre de chaque assise).

En variante, le siège 8 pourrait être du type simple, destiné à être utilisé par une personne. Un tel siège simple comporte une seule place 9, comprenant une assise 10, un dossier 12 prolongeant l'assise 10 et au moins un accoudoir 14, notamment deux accoudoirs 14 disposés de part et d'autre de l'assise 10.

Le siège 8 comporte un bâti 16 qui porte chaque assise 10 et chaque dossier 12.

Le siège 8 est équipé d'un dispositif de rotation, permettant la rotation du siège 8 autour d'un axe vertical V, entre deux positions angulaires extrêmes. Le dispositif de rotation permet par exemple une rotation du siège 8 à 180°, permettant d'aligner le siège 8 avec une direction longitudinale X du véhicule ferroviaire, dans un sens ou un autre, par exemple en fonction du sens de déplacement de ce véhicule ferroviaire.

Le bâti du siège est monté en rotation sur une structure de support 18. La structure de support 18 comporte un pied 20 destiné à être tourné vers un couloir adjacent au siège 8, un plateau de support 22 porté par le pied 20, et un organe de fixation. Dans l'exemple décrit, l'organe de fixation permet la fixation de la structure de support 18 à une paroi latérale délimitant une salle du véhicule ferroviaire. En variante, l'organe de fixation pourrait être formé par un autre pied de forme similaire à celle du pied 20.

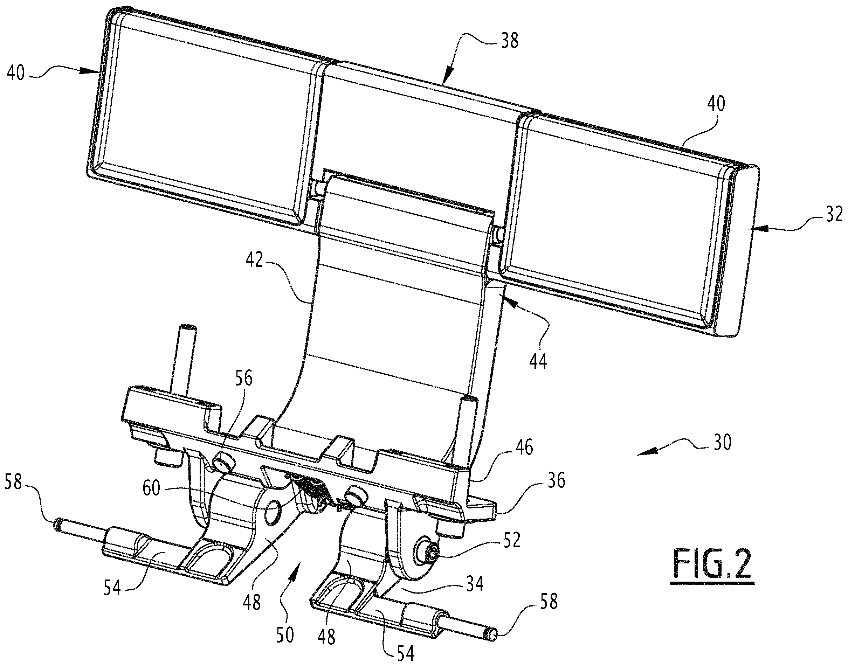

Le siège 8 comporte, pour chaque place 9, un repose-pieds mobile 30 représenté plus en détail sur la figure 2. Chaque repose-pieds 30 comporte une partie libre 32, et une partie de liaison 34 reliée au dossier 12 de la place 9 respective par un organe de liaison 36.

Le repose-pieds 30 est par exemple réalisé en matière plastique ou en métal.

La partie libre 32 du repose-pieds 30 comporte classiquement une plaque centrale 38 et deux plaques latérales 40 prolongeant de part et d'autre la plaque centrale 38.

La partie libre 32 est reliée à la partie de liaison 34 par un bras 42 prolongeant la plaque centrale 38 perpendiculairement aux deux plaques latérales 40.

On définit une première extrémité 44 du bras 42 située au voisinage de la partie libre 32 et une deuxième extrémité 46 du bras 42 située au voisinage de la partie de liaison 34 du repose-pieds 30.

Dans l'exemple décrit, le bras 42 est courbé de sorte que la première extrémité 44 forme un angle obtus avec la deuxième extrémité 46 comme connu en soi.

La deuxième extrémité 46 du bras 42 comprend au moins un, par exemple deux prolongements 48 formant la partie de liaison du repose-pieds 30. Les deux prolongements 48 délimitent entre eux un espace central 50. Les deux prolongements 48 sont reliés à l'organe de liaison 36 par une liaison pivot 52.

La liaison pivot 52 permet la rotation du repose-pieds 30 autour d'un axe horizontal H entre une première position angulaire extrême U, dite position d'utilisation U, et une deuxième position angulaire extrême R, dite position rabattue R, représentées sur la figure 1.

Dans la position d'utilisation U du repose-pieds 30, la partie libre 32 est propre à recevoir des pieds d'un utilisateur.

Dans la position rabattue R du repose-pieds 30, la partie libre 32 est rabattue contre le dossier 12.

La partie de liaison 34 comporte au moins un, par exemple deux éléments de butée 54 qui viennent buter contre des tampons d'amortissement 56, portés par l'organe de liaison 36, lorsque le repose-pieds 30 est en position d'utilisation U.

Les éléments de butée 54 s'étendent par exemple transversalement aux deux prolongements 48 et à l'opposé de l'espace central 50. Les éléments de butée 54 présentent une forme générale de L.

Au moins un élément de butée 54, ou en variante chaque élément de butée 54, comporte une extension 58 prolongeant latéralement cet élément de butée 54.

De manière classique, le repose-pieds 30 est mobile, entre sa position d'utilisation U et sa position rabattue R, sur une course C comportant une première zone Z1, dans laquelle le repose-pieds 30 est entraîné par gravité vers la position d'utilisation U, et une seconde zone Z2, dans laquelle le repose-pieds 30 est rappelé élastiquement vers la position rabattue par un organe élastique de relevage 60 prévu à cet effet. Ainsi, il suffit de passer le repose-pieds 30 dans la première zone Z1 pour qu'il termine sa course C vers la position d'utilisation U sous l'effet de la gravité, ou de passer le repose-pieds 30 dans la seconde zone Z2 pour qu'il termine sa course C vers la position rabattue R sous l'effet de l'organe élastique de relevage 60.

L'organe élastique de relevage 60 comprend par exemple au moins un ressort, notamment de torsion.

L'organe élastique de relevage 60 est de préférence disposé dans l'espace central 50 délimité par les deux prolongements 48 du bras 42.

De préférence, la première zone Z1 s'étend sur moins de 20% de la course totale C du repose-pieds 30, et par exemple sur 10% de cette course totale C.

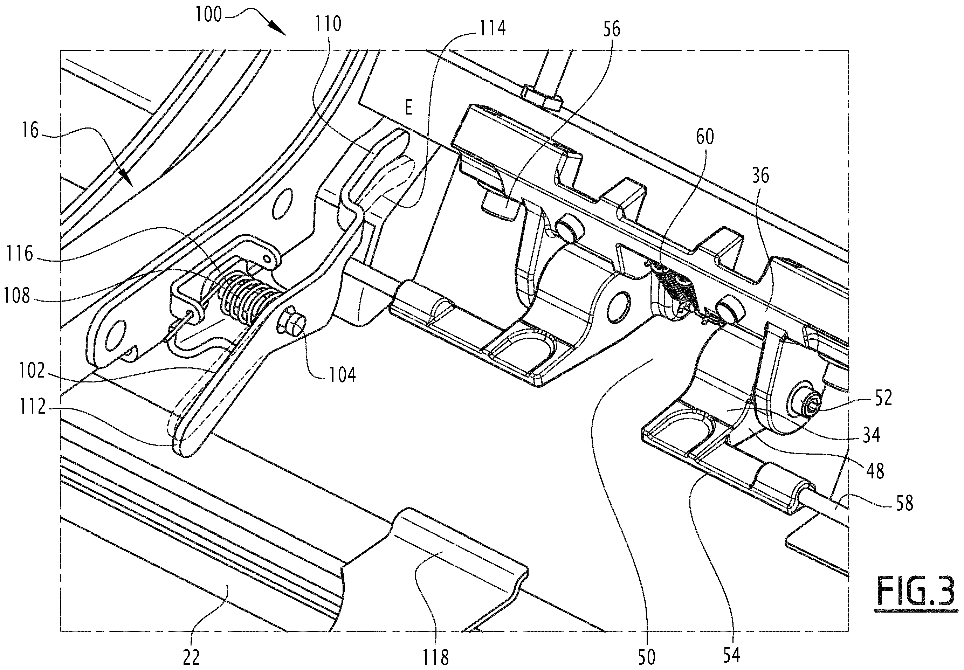

Chaque place 9 comporte un dispositif de relevage 100 du repose-pieds 30 respectif, comme représenté sur la figure 3. Sur cette figure 3, le repose-pieds 30 est en position rabattue R.

Pour chaque place 9, le dispositif de relevage 100 comporte un levier 102. Ce levier 102 est de préférence porté par le siège 8, et notamment par le bâti 16 de ce siège 8. Le levier 102 est configuré pour déplacer le repose-pieds 30 correspondant depuis la position d'utilisation U, jusqu'à dans la seconde zone Z2.

Le levier 102 est, par exemple, réalisé en métal.

Le levier 102 comporte un point d'articulation 104 relié au bâti 16 du siège 8 par une liaison pivot 108, une première extrémité 110, dite extrémité menée 110 et une deuxième extrémité 112, dite extrémité menante 112.

Les extrémités 110, 112 du levier 102 sont situées de part et d'autre du point d'articulation 104.

Le levier 102 et le repose-pieds 30 sont disposés de sorte que le repose-pieds 30 vient coopérer avec l'extrémité menée 110 du levier 102, au moins lorsque ce repose-pieds 30 est en position d'utilisation U. Plus particulièrement, l'une des extensions 58 de la partie de liaison 34 coopère avec l'extrémité menée 110 du levier 102, au moins dans la position d'utilisation U du repose-pieds 30. Avantageusement, l'extrémité menée 110 délimite un creux 114 de réception de l'extension 58, recevant cette extension 58 au moins lorsque le repose-pieds 30 est en position d'utilisation U.

Le levier 102 est mobile sur une course s'étendant entre une position d'enclenchement E dans laquelle le repose-pieds 30 vient coopérer avec l'extrémité menée 110 du levier lorsque ce repose-pieds 30 est en position d'utilisation U, et une position baissée B.

Lorsque le levier 102 coopère avec le repose-pieds 30, le déplacement du levier 102 vers sa position baissée B entraîne le déplacement du repose-pieds 30 vers la seconde zone Z2 de sa course C. On assure ainsi le passage du repose-pieds 30 depuis sa position d'utilisation U vers sa position rabattue R.

Avantageusement, le levier 102 comprend un organe élastique 116 de rappel vers la position d'enclenchement.

L'organe élastique de rappel 116 est par exemple situé au point d'articulation 104 du levier 102.

L'organe élastique de rappel 116 est par exemple un ressort hélicoïdal de torsion.

Le dispositif de relevage 100 comporte également au moins un bossage 118 ménagé sur le plateau de support 22, le bossage 118 étant disposé de sorte qu'il entre en coopération avec le levier 102 en position d'enclenchement E, et plus particulièrement avec son extrémité menante 112, pendant la rotation du siège 8.

Le bossage 118 est avantageusement disposé sur un bord du plateau de support 22, en regard de l'extrémité menante 112 du levier 102 dans au moins une position angulaire extrême du siège 8.

Avantageusement, le plateau de support 22 comporte au moins deux bossages 118, chaque bossage 118 étant destiné à coopérer avec le même levier 102, chacun lorsque le siège 8 se déplace dans un sens de rotation respectif.

Un procédé de relevage du repose-pieds 30 depuis la position d'utilisation U vers la position rabattue R va maintenant être décrit.

Dans la position d'utilisation U du repose-pieds 30, ce repose-pieds 30 coopère avec l'extrémité menée 110 du levier 102. Plus particulièrement, l'extension 58 de la partie de liaison 34 du repose-pieds 30 située en regard du creux 114 du levier 102 vient se loger dans le creux 114 du levier 102, et le levier 102 est en position d'enclenchement E.

Le siège 8 est mis en rotation autour de l'axe vertical V au moins jusqu'à ce que l'extrémité menante 112 du levier 102 vienne coopérer avec le bossage 118 correspondant ménagé sur la structure de support 18. La coopération de l'extrémité menante 112 du levier 102 avec ce bossage 118 entraîne la rotation du levier 102 vers sa position baissée, entraînant l'appui de l'extrémité menée 110 du levier 102 sur le repose-pieds 30. La rotation du levier 102 entraîne alors la rotation du repose-pieds 30 pour sortir le repose-pieds 30 de la première zone Z1 de sa course C. Le levier 102 déplace le repose-pieds 30 depuis la position d'utilisation U, jusqu'à dans la seconde zone Z2.

Le repose-pieds 30 est alors poussé au-delà de la première zone Z1 de sa course C. Au-delà de cette première zone Z1, le repose-pieds 30 entre dans la seconde zone Z2 de sa course C, dans laquelle le repose-pieds 30 est entraîné par l'organe élastique 60 de relevage de ce repose-pieds 30 vers sa position rabattue R.

Grâce à ce rabattement automatique, un tel repose-pieds 30 présente l'avantage de ne pas dégrader l'environnement lors de la rotation du siège 8. En outre, un opérateur qui met un siège 8 selon l'invention en rotation ne risque pas de se blesser avec un repose-pieds 30 en position d'utilisation U.

Enfin, l'opérateur ne perd pas de temps à relever manuellement les repose-pieds 30.

## Revendications

1. Siège (8) rotatif autour d'un axe de rotation vertical (V), notamment destiné à équiper un véhicule ferroviaire, le siège (8) comportant un bâti (16) monté à rotation sur une structure de support (18) comportant un plateau de support (22), le siège (8) comportant au moins une place (9) comportant une assise (10) et un dossier (12), le siège (8) étant équipé d'au moins un repose-pieds (30) comportant une partie de liaison (34) reliée au dossier (12) du siège et une partie libre (32), le repose- pieds (30) étant mobile autour d'un axe de rotation horizontal (H) entre une position d'utilisation (U) dans laquelle la partie libre (32) est propre à recevoir des pieds d'un utilisateur, et une position rabattue (R), dans laquelle la partie libre (32) est rabattue contre le dossier (12), **caractérisé en ce que** :
le siège (8) comporte un dispositif (100) de relevage du repose-pieds (30) depuis la position d'utilisation (U) vers la position rabattue (R), le dispositif de relevage (100) comprenant un levier (102) configuré pour déplacer le repose-pieds (30) vers sa position rabattue (R), le levier (102) étant porté par le siège (8) et comportant un point d'articulation (104), une extrémité menée (110) et une extrémité menante (112) situées de part et d'autre du point d'articulation (104), le levier (102) étant disposé de sorte que l'extrémité menée (110) vient coopérer avec le repose-pieds (30) au moins en position d'utilisation (U), et l'extrémité menante (112) vient coopérer avec un bossage (118) ménagé sur le plateau de support (22) lorsque le siège (8) se déplace en rotation.

2. Siège (8) selon la revendication 1, dans lequel la partie de liaison (34) du repose-pieds (30) présente au moins une extension (58), l'extension (58) étant destinée à coopérer avec l'extrémité menée (110) du levier (102) au moins lorsque le repose-pieds (30) est dans sa position d'utilisation (U).

3. Siège (8) selon la revendication 1 ou 2, dans lequel le levier (102) est mobile entre une position d'enclenchement (E), dans laquelle le repose-pieds (30) vient coopérer avec ce levier (102) lorsque ce repose-pieds (30) est en position d'utilisation (U), et une position baissée (B), le levier (102) comprenant au point d'articulation (104) un organe élastique (116) de rappel de ce levier (102) vers sa position d'enclenchement (E).

4. Siège (8) selon l'une quelconque des revendications précédentes, dans lequel le repose-pieds (30) est mobile entre la position d'utilisation (U) et la position rabattue (R) sur une course (C) comportant une première zone (Z1), dans laquelle le repose-pieds (30) est entraîné par gravité vers la position d'utilisation (U), et une seconde zone (Z2), dans laquelle le repose-pieds (30) est rappelé élastiquement vers la position rabattue (R), le levier (102) étant configuré pour déplacer le repose-pieds (102) depuis la position d'utilisation (U), jusqu'à dans la seconde zone (Z2).

5. Siège (8) selon la revendication 4, dans lequel la partie de liaison (34) du repose-pieds (30) comprend un organe élastique (60) de relevage du repose-pieds (30) vers sa position rabattue (R), lorsque le repose-pieds (30) est dans la seconde zone (Z2).

6. Siège (8) selon l'une quelconque des revendications précédentes, dans lequel le plateau de support (22) comporte au moins deux bossages (118), chaque bossage (118) étant destiné à coopérer avec le même levier (102) lorsque le siège (8) se déplace dans un sens de rotation respectif.

7. Siège (8) selon l'une quelconque des revendications précédentes, le siège (8) étant un siège du type double comportant deux places (9) comportant chacune une assise (10) respective et un dossier (12) respectif prolongeant l'assise (10) correspondante, chaque place (9) étant équipée d'un repose-pieds (30) respectif, chaque repose-pieds (30) comportant une partie de liaison (34) respective reliée au dossier (12) correspondant et une partie libre (32) respective, chaque place (9) comportant un dispositif (100) respectif de relevage du repose-pieds (30) correspondant depuis la position d'utilisation (U) vers la position rabattue (R), et chaque dispositif de relevage (100) comprenant un levier (102) respectif configuré pour déplacer le repose-pieds (30) correspondant vers sa position rabattue (R), chaque levier (102) étant porté par le siège (8), chaque repose-pieds (30) venant coopérer avec l'extrémité menée (110) du levier (102) respectif au moins en position d'utilisation (U), et l'extrémité menante (112) respective venant coopérer avec un bossage (118) respectif ménagé sur le plateau de support (22), lorsque le siège (8) se déplace en rotation.

8. Procédé de relevage d'un repose-pieds (30) d'un siège rotatif (8) selon l'une quelconque des revendications précédentes, le repose-pieds (30) étant dans une position d'utilisation (U) dans laquelle le repose-pieds (30) coopère avec l'extrémité menée (110) du levier (102), dans lequel le siège (8) est mis en rotation autour de l'axe vertical (V) au moins jusqu'à ce que l'extrémité menante (112) du levier (102) vienne coopérer avec un bossage (118), entraînant la rotation du levier (102), ladite rotation du levier (102) entraînant l'appui de l'extrémité menée (110) du levier sur le repose-pied, entraînant la rotation du repose-pieds (30) vers sa position rabattue (R).

9. Procédé de relevage selon la revendication 8, dans lequel le repose-pieds (30) est mobile entre la position d'utilisation (U) et la position rabattue (R) sur une course (C) comportant une première zone (Z1), dans laquelle le repose-pieds (30) est entraîné par gravité vers la position d'utilisation (U), et une seconde zone (Z2), dans laquelle le repose-pieds (30) est rappelé élastiquement vers la position rabattue (R), et dans lequel le levier (102) déplace le repose-pieds (30) depuis la position d'utilisation (U), jusqu'à dans la seconde zone (Z2).

## Patentansprüche

1. Sitz (8), der um eine vertikale Drehachse (V) drehbar ist, insbesondere zum Ausrüsten eines Schienenfahrzeuges, wobei der Sitz (8) ein Gestell (16) aufweist, das drehbar auf einer Trägerstruktur (18) montiert ist, die eine Trägerplatte (22) aufweist, wobei der Sitz (8) mindestens einen Platz (9) umfasst, der ein Sitzteil (10) und ein Rückenlehne (12) aufweist, und der Sitz (8) mit mindestens einer Fußstütze (30) ausgerüstet ist, die ein mit der Rückenlehne (12) des Sitzes verbundenes Verbindungsteil (34) und ein freies Teil (32) aufweist, wobei die Fußstütze (30) um eine horizontale Drehachse (H) zwischen einer Benutzungsstellung (U), in der das freie Teil (32) geeignet ist, die Füße einer Nutzerperson abzustützen, und einer hochgeklappten Stellung (R), in der das freie Teil (32) gegen die Rückenlehne (12) hochgeklappt ist, **dadurch gekennzeichnet**, beweglich ist, dass:
der Sitz (8) eine Vorrichtung (100) zum Anheben der Fußstütze (30) von der Benutzungsstellung (U) in die hochgeklappte Stellung (R) aufweist, wobei die Anhebungsvorrichtung (100) einen Hebel (102) umfasst, der zum Bewegen der Fußstütze (30) in ihre hochgeklappte Stellung (R) ausgebildet ist, wobei der Hebel (102) von dem Sitz (8) getragen wird und eine Gelenkstelle (104), ein angetriebenes Ende (110) und ein Antriebsende (112), die beidseitig der Gelenkstelle (104) liegen, aufweist, der Hebel (102) derart angeordnet ist, dass das angetriebene Ende (110) mit der Fußstütze (30) zumindest in der Benutzungsstellung (U) zusammenarbeitet und das Antriebsende (112) mit einer an der Trägerplatte (22) eingearbeiteten Erhöhung (118) zusammenarbeitet, wenn der Sitz (8) sich zur Drehung bewegt.

2. Sitz (8) nach Anspruch 1, bei dem das Verbindungsteil (34) der Fußstütze (30) mindestens eine Verlängerung (58) aufweist, wobei die Verlängerung (58) vorgesehen ist, mit dem angetriebenen Ende (110) des Hebels (120) zumindest dann zusammenzuarbeiten, wenn die Fußstütze (30) in ihrer Benutzungsstellung (U) ist.

3. Sitz (8) nach Anspruch 1 oder 2, bei dem der Hebel (102) zwischen einer Auslösestellung (E 2), in der die Fußstütze (30) mit dem Hebel (102) zusammenarbeitet, wenn diese Fußstütze (30) in der Benutzungsstellung (U) ist, und einer abgesenkten Stellung (B) beweglich ist, wobei der Hebel (102) an der Gelenkstelle (104) ein elastisches Element (116) zum Rückstellen dieses Hebels (102) in seine Auslösestellung umfasst.

4. Sitz (8) nach einem beliebigen der vorhergehenden Ansprüche, bei dem die Fußstütze (30) zwischen der Benutzungsstellung (U) und der hochgeklappten Stellung (R) auf einem Weg (C) beweglich ist, der eine erste Zone (Z1), in der die Fußstütze (30) durch Schwerkraft in die Benutzungsstellung (U) mitgenommen wird, und einer zweiten Zone (Z2), in der die Fußstütze (30) elastisch in die hochgeklappte Stellung (R) zurückgestellt wird, aufweist, wobei der Hebel (102) ausgebildet ist, die Fußstütze (30) von der Benutzungsstellung (U) bis zur zweiten Zone (Z2) zu bewegen.

5. Sitz (8) nach Anspruch 4, bei dem das Verbindungsteil (34) der Fußstütze (30) ein elastisches Element (60) zum Anheben der Fußstütze (30) in ihre hochgeklappte Stellung (R) aufweist, wenn die Fußstütze (30) in der zweiten Zone (Z2) ist.

6. Sitz (8) nach einem beliebigen der vorhergehenden Ansprüche, bei dem die Trägerplatte (22) mindestens zwei Erhebungen (118) aufweist, wobei jede Erhebung (118) dazu dient, mit demselben Hebel (102) zusammenzuarbeiten, wenn der Sitz (8) sich in eine jeweilige Drehrichtung bewegt.

7. Sitz (8) nach einem beliebigen der vorhergehenden Ansprüche, wobei der Sitz (8) ein Doppelsitz ist, der zwei Plätze (9) aufweist, die jeweils ein entsprechendes Sitzteil (10) und eine entsprechende Rückenlehne (12), die das entsprechende Sitzteil (10) verlängert, aufweisen, wobei jeder Platz (9) mit einer jeweiligen Fußstütze (30) ausgerüstet ist und jede Fußstütze (30) ein jeweiliges Verbindungsteil (34), das mit der entsprechenden Rückenlehne (12) verbunden ist, aufweist, jeder Platz (9) eine jeweilige Vorrichtung (100) zum Anheben der entsprechenden Fußstütze (30) von der Benutzungsstellung (U) in die hochgeklappte Stellung (R) aufweist und jede Anhebungsvorrichtung (100) einen jeweiligen Hebel (102) umfasst, der zum Bewegen der entsprechenden Fußstütze (30) in ihre hochgeklappte Stellung (R) ausgebildet ist, wobei jeder Hebel (102) von dem Sitz (8) getragen wird, jede Fußstütze (30) mit dem Antriebsende (110) des jeweiligen Hebels (102) zumindest in der Benutzungsstellung (U) zusammenarbeitet und das jeweilige angetriebene Ende (112) mit einer jeweiligen an den der Trägerplatte (22) eingearbeiteten Erhebung (118) zusammenarbeitet, wenn der Sitz (8) sich zur Drehung bewegt.

8. Verfahren zum Anheben einer Fußstütze (30) eines drehbaren Sitzes (8) nach einem beliebigen der vorhergehenden Ansprüche, wobei, wenn die Fußstütze (30) in einer Benutzungsstellung (U) ist, die Fußstütze (30) mit einem Antriebsende (110) des Hebels (102) zusammenarbeitet, bei dem der Sitz (8) um eine vertikale Achse (V) zumindest so lange in Drehung versetzt wird, bis das Antriebsende (112) des Hebels (102) mit einer Erhebung (118) zusammenarbeitet, wodurch die Drehung des Hebels (102) bewirkt wird, wobei die Drehung des Hebels (102) das Abstützen des angetriebenen Endes (110) des Hebels an der Fußstütze herbeiführt, wodurch die Drehung der Fußstütze (30) in ihre hochgeklappte Stellung (R) bewirkt wird.

9. Verfahren zum Anheben nach Anspruch 8, bei dem die Fußstütze (30) zwischen der Benutzungsstellung (U) und der hochgeklappten Stellung (R) auf einem Weg (C) beweglich ist, der eine erste Zone (Z1), in der die Fußstütze (30) durch Schwerkraft in die Benutzungsstellung (U) befördert wird, und einer zweiten Zone (Z2), in der die Fußstütze (30) elastisch in die hochgeklappte Stellung (R) zurückgeführt wird, umfasst, und bei dem der Hebel (102) die Fußstütze (30) von der Benutzungsstellung (U) bis in die zweite Zone (Z2) bewegt.

## Claims

1. Seat (8) which rotates about a vertical axis of rotation (V), in particular intended to equip a railway vehicle, the seat (8) comprising a frame (16) mounted to rotate on a support structure (18) comprising a support plate (22), the seat (8) comprising at least one place (9) comprising a seating part (10) and a back (12), the seat (8) being equipped with at least one footrest (30) comprising a linking part (34) connected to the back (12) of the seat and a free part (32), the footrest (30) being mobile about a horizontal axis of rotation (H) between a position of use (U) in which the free part is able to receive the feet of a user, and a folded-up position (R) in which the free part (32) is folded-up against the back (12), **characterised in that**:
the seat (8) comprises a device (100) for lifting the footrest (30) from the position of use (U) towards the folded-up position (R), the lifting device (100) comprising a lever (102) which is configured to displace the footrest (30) towards its folded-up position (R), the lever (102) being carried by the seat (8) and comprising an articulation point (104), a led end (110) and a leading end (112) situated on both sides of the articulation point (104), the lever (102) being disposed so that the led end (110) comes to cooperate with the footrest (30) at least in the position of use (U), and the leading end (112) comes to cooperate with a boss (118) provided on the support plate (22) when the seat (8) is displaced by rotation.

2. Seat (8) according to claim 1, in which the linking part (34) of the footrest (30) has at least one extension (58), the extension (58) being intended to cooperate with the led end (110) of the lever (102) at least when the footrest (30) is in its position of use (U).

3. Seat (8) according to claim 1 or 2, in which the lever (102) is mobile between a position of engagement (E) in which the footrest (30) comes to cooperate with this lever (102) when this footrest (30) is in the position of use (U), and a lowered position (B), the lever (102) comprising, at the articulation point (104), an elastic element (116) for returning this lever (102) towards its engaged position (E).

4. Seat (8) according to any of the preceding claims, in which the footrest (30) is mobile between the position of use (U) and the folded-up position (R) over a course (C) comprising a first zone (Z1) in which the footrest (30) is driven by gravity towards the position of use (U), and a second zone (Z2), in which the footrest (30) is returned elastically towards the folded-up position (R), the lever (102) being configured to displace the footrest (102) from the position of use (U), until in the second zone (Z2).

5. Seat (8) according to claim 4, in which the linking part (34) of the footrest (30) comprises an elastic element (60) for lifting the footrest (30) towards its folded-up position (R), when the footrest (30) is in the second zone (Z2).

6. Seat (8) according to any of the preceding claims, in which the support plate (22) comprises at least two bosses (118), each boss (118) being intended to cooperate with the same lever (102) when the seat (8) is displaced into a respective direction of rotation.

7. Seat (8) according to any of the preceding claims, the seat (8) being a seat of the double type comprising two places (9), each comprising a respective seating part (10) and a respective back (12) prolonging the corresponding seating part (10), each place (9) being equipped with a respective footrest (30), each footrest (30) comprising a respective linking part (34) connected to the corresponding back (12) and a respective free part (32), each place (9) comprising a respective device (100) for lifting the corresponding footrest (30) from the position of use (U) towards the folded-up position (R), and each lifting device (100) comprising a respective lever (102) which is configured to displace the corresponding footrest (30) towards its folded-up position (R), each lever (102) being carried by the seat (8), each footrest (30) coming to cooperate with the led end (110) of the respective lever (102) at least into the position of use (U), and the respective leading end (112) coming to cooperate with a respective boss (118) provided on the support plate (22), when the seat (8) is displaced by rotation.

8. Method for lifting a footrest (30) of a rotating seat (8) according to any of the preceding claims, the footrest (30) being in a position of use (U) in which the footrest (30) cooperates with the led end (110) of the lever (102), in which the seat (8) is set in rotation about the vertical axis (V) at least until the leading end (112) of the lever (102) comes to cooperate with a boss (118), driving the rotation of the lever (102), said rotation of the lever (102) driving support of the led end (110) of the lever onto the footrest, driving the rotation of the footrest (30) towards its folded-up position (R).

9. Lifting method according to claim 8, in which the footrest (30) is mobile between the position of use (U) and the folded-up position (R) over a course (C) comprising a first zone (Z1), in which the footrest (30) is driven by gravity towards the position of use (U), and a second zone (Z2) in which the footrest (30) is returned elastically towards the folded-up position (R), and in which the lever (102) displaces the footrest (30) from the position of use (U), until in the second zone (Z2).
